## Europäisches Patentamt

## European Patent Office

## Office européen des brevets

(11) Veröffentlichungsnummer: **0 378 742**
**A2**

# EUROPÄISCHE PATENTANMELDUNG

(21) Anmeldenummer: **89108201.8**

(22) Anmeldetag: **06.05.89**

(51) Int. Cl.5: **B62D 11/18**

(30) Priorität: **20.01.89 DE 8900577 U**

(43) Veröffentlichungstag der Anmeldung:
**25.07.90 Patentblatt 90/30**

(84) Benannte Vertragsstaaten:
**CH DE ES FR GB IT LI NL SE**

(71) Anmelder: **ABG-WERKE GmbH**
**Kuhbrückenstrasse 18**
**D-3250 Hameln 1(DE)**

(72) Erfinder: **Bächle, Hans-Dieter**
**Heinefeldesweg 9**
**D-3251 Aerzen 1(DE)**

(74) Vertreter: **Sparing - Röhl - Henseler**
**Patentanwälte**
**Rethelstrasse 123 Postfach 14 02 68**
**D-4000 Düsseldorf 1(DE)**

(54) **Gleiskettenfahrzeug, insbesondere Strassenfertiger.**

(57) Die Erfindung betrifft ein Gleiskettenfahrzeug, insbesondere Straßenfertiger, mit zwei Gleiskettenlaufwerken (11, 12), die jeweils mit einem Einzelan- trieb gekoppelt sind, wobei die beiden Einzelantriebe jeweils eine Fahrpumpe (3 bzw. 4) und einen in deren Kreislauf geschalteten Hydraulikmotor (7 bzw. 8), der über ein Getriebe (14 bzw. 15) das jeweilige Gleiskettenlaufwerks (11 bzw. 12) antreibt, umfaßt. Um absolute Geradeausfahrt zu ermöglichen, ist vor- gesehen, daß die beiden Kreisläufe der beiden Fahr- pumpen (3, 4) über wenigstens ein Magnetventil (19) verbunden sind und eine Kupplung (16) zum Kop- peln der beiden Hydraulikmotoren (7, 8) bei Gerade- ausfahrt vorgesehen ist, wobei das Magnetventil (19) bei Geradeausfahrt in seine geöffnete Stellung und bei Kurvenfahrt in seine Schließstellung schaltbar ist.

Fig. 1

Die Erfindung betrifft ein Gleiskettenfahrzeug, insbesondere einen Straßenfertiger, mit zwei Gleiskettenlaufwerken, die jeweils mit einem einen Hydraulikkreislauf aufweisenden hydraulischen Einzelantrieb, der über ein Getriebe das jeweilige Gleiskettenlaufwerk antreibt, gekoppelt sind, wobei insbesondere die beiden Einzelantriebe jeweils eine Fahrpumpe und einen in deren Kreislauf geschalteten Hydraulikmotor umfassen.

Bei Straßenfertigern wird es angestrebt, eine absolute Geradeausfahrt zu ermöglichen. Zu diesem Zweck sind starre Antriebseinrichtungen bekannt, die eine gute Geradeausfahrt ermöglichen, jedoch den Nachteil haben, daß bei Kurvenfahrt der Antrieb auf ein Gleiskettenlaufwerk an nur einer Seite verlagert wird.

Außerdem ist es bekannt, für die beiden Gleiskettenlaufwerke jeweils einen Einzelantrieb vorzusehen, wobei eine elektronische Steuerung vorgesehen ist, die die beiden Einzelantriebe für die Geradeausfahrt elektronisch synchronisiert. Diese elektronische Synchronisation bleibt jedoch immer fehlerbehaftet, so daß sich keine "absolute" Geradeausfahrt ergibt, und ist außerdem störanfällig.

Aufgabe der Erfindung ist es, ein Gleiskettenfahrzeug der eingangs genannten Art zu schaffen, das eine möglichst absolute Geradeausfahrt ermöglicht und bei Kurvenfahrt beide Gleiskettenlaufwerke einsetzen kann.

Diese Aufgabe wird dadurch gelöst, daß die beiden Hydraulikkreisläufe der beiden Einzelantriebe über wenigstens ein Magnetventil verbunden sind und eine Kupplung zum Koppeln der beiden Einzelantriebe bei Geradeausfahrt vorgesehen ist, wobei das Magnetventil bei Geradeausfahrt in seine geöffnete Stellung und bei Kurvenfahrt in seine Schließstellung schaltbar ist.

Hierbei werden die beiden Einzelantriebe für das jeweilige Gleiskettenlaufwerk für die Geradeausfahrt zusammengeschaltet, wobei außerdem die Unterschiede zwischen den Einzelantrieben aufgrund von Lecköl etc. ausgeglichen werden.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

Fig. 1 zeigt eine erste Ausführungsform eines Antriebs für einen Strassenfertiger.

Fig. 2 zeigt ausschnittweise eine zweite Ausführungsform eines Antriebs für einen Straßenfertiger.

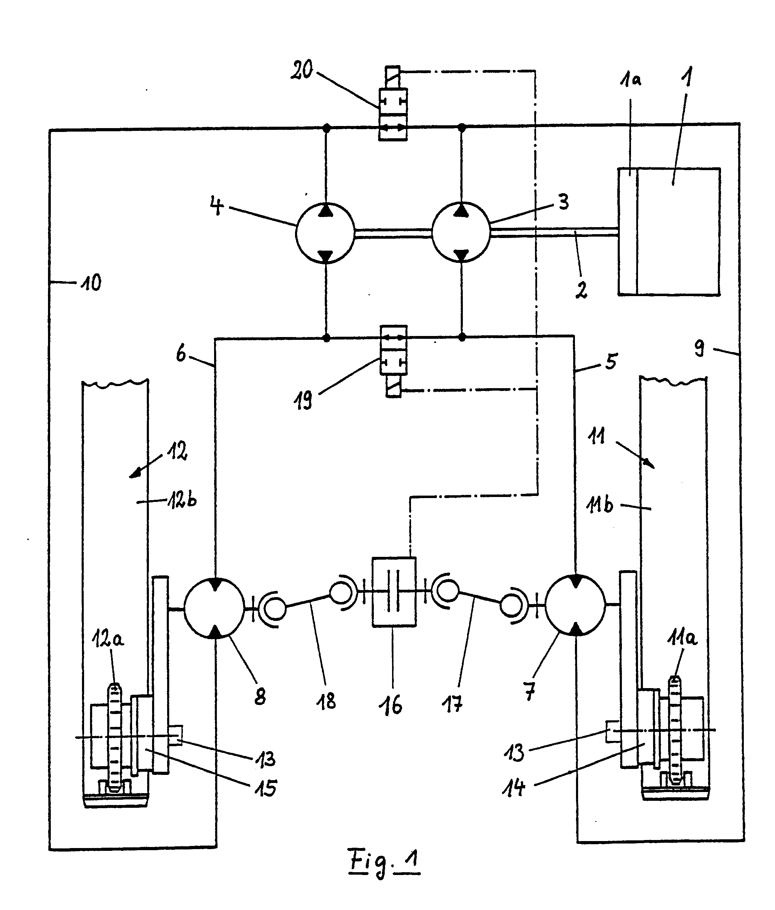

Der in Fig. 1 dargestellte Straßenfertiger besitzt einen Antriebsmotor 1 (Dieselmotor) der über ein Getriebe 1a und dessen Abtriebswelle 2 zwei Fahrpumpen 3 und 4, beispielsweise Axialkolbenpumpen, antreibt. Druckseitig sind die Fahrpumpen 3, 4 über eine Druckleitung 5 bzw. 6 jeweils mit einem Hydraulikzylinder 7 verbunden, von dem aus die Hydraulikflüssigkeit über eine Leitung 9 bzw. 10 zur Niederdruckseite der zugehörigen Fahrpumpe 3 bzw. 4 zurückgeführt wird.

Mit dem jeweiligen Hydraulikmotor 7 bzw. 8 ist jeweils ein Gleiskettenlaufwerk 11 bzw. 12 mit einem Triebrad 11a bzw. 12a und einer Gleiskette 11b bzw. 12b über ein mit einem Schaltzylinder 13 versehenes Turasgetriebe 14 bzw. 15 gekoppelt.

Für Kurvenfahrt werden die aus der Fahrpumpe 3 bzw. 4 und dem zugehörigen Hydraulikmotor 7 bzw. 8 bestehenden Einzelantriebe für die beiden Gleiskettenlaufwerke 11 und 12 unabhängig voneinander betätigt, ohne daß der Antrieb auf nur eine Seite verlagert werden müßte.

Für die Geradeausfahrt ist eine Kupplung 16, etwa eine Lamellenkupplung, vorgesehen, die beispielsweise elektrisch über das Lenkrad des Straßenfertigers betätigbar ist und in der Nullage des Lenkrads die beiden Hydraulikmotoren 7, 8, die über Gelenkwellen 17 bzw. 18 mit der Kupplung 16 verbunden sind, miteinander koppelt.

Da jedoch die beiden Einzelantriebe bereits aufgrund von Lecköiverlusten und dergleichen nicht absolut gleich sind, würde die durch die Kupplung 16 bewirkte Kopplung den nachfolgenden Hydraulikantrieb wirkungslos machen.

Hierzu ist vielmehr zusätzlich vorgesehen, die beiden Druckleitungen 5, 6 ebenso wie 9, 10 jeweils über ein Magnetventil 19 bzw. 20 miteinander zu verbinden, die bei Geradeausfahrt, d.h. wenn die Kupplung 16 greift, geöffnet und bei Kurvenfahrt, d.h. wenn die Kupplung 16 gelöst ist, geschlossen sind. Hierdurch werden bei Geradeausfahrt Unterschiede der Einzelantriebe ausgeglichen. Zweckmäßigerweise lassen die Magnetventile 19, 20 einen Volumenstrom und damit eine maximale Leistungsschwankung in beiden Kreisläufen von höchstens 5%, vorzugsweise höchstens 3% zu.

Die Schaltzylinder 13 ermöglich einen größeren Arbeitsbereich, d.h. daß die Transportgeschwindigkeit erheblich größer als die Einbaugeschwindigkeit gewählt werden kann.

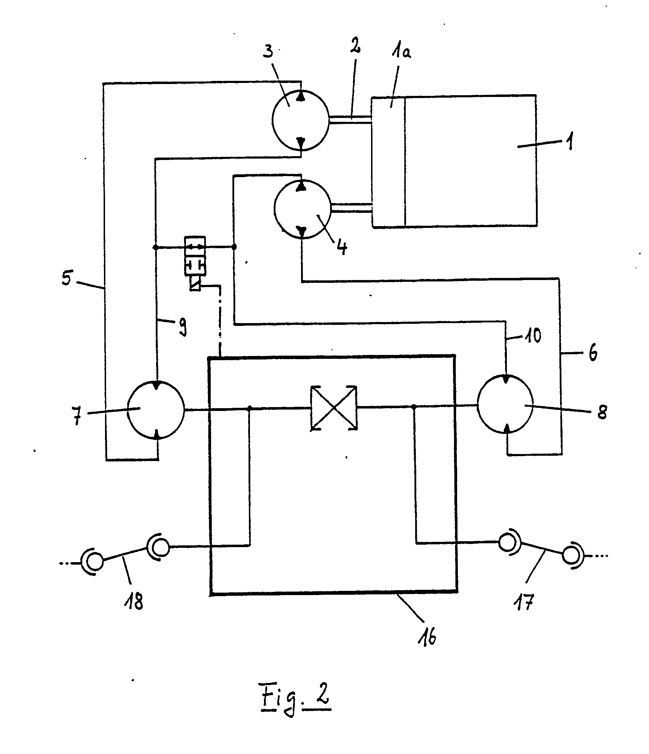

Wie in Fig. 2 dargestellt ist, kann das Getriebe 1a auch zwei Abtriebswellen 2 aufweisen, von denen die eine die Fahrpumpe 3 und die andere die Fahrpumpe 4 antreibt.

Wie ebenfalls in Fig. 2 dargestellt ist, können die aus Fahrpumpe 3 bzw. 4 und dem zugehörigen Hydraulikmotor 7 bzw. 8 bestehenden Einzelantriebe auch direkt mit der Kupplung 16 gekoppelt sein, die bei Geradeausfahrt die Gelenkwellen 17, 18, die dann direkt mit den Schaltgetrieben 14 bzw. 15 verbunden sind, koppelt.

Die Fahrpumpen 3, 4 und die Hydraulikmotoren 7, 8 können je nach Art der Getriebe Verstell- oder Konstantaggregate sein.

In den Abbildungen sind Füllpumpen, Sicherheitsventile u. dgl. für die geschlossenen Kreisläufe weggelassen.

## Ansprüche

1. Gleiskettenfahrzeug, insbesondere Straßenfertiger, mit zwei Gleiskettenlaufwerken (11, 12), die jeweils mit einem einen Hydraulikkreislauf aufweisenden hydraulischen Einzelantrieb, der über ein Getriebe (14 bzw. 15) das jeweilige Gleiskettenlaufwerk (11 bzw. 12) antreibt, gekoppelt sind, wobei insbesondere die beiden Einzelantriebe jeweils eine Fahrpumpe (3 bzw. 4) und einen in deren Kreislauf geschalteten Hydraulikmotor (7 bzw. 8) umfassen, dadurch **gekennzeichnet,** daß die beiden Hydraulikkreisläufe der beiden Einzelantriebe über wenigstens ein Magnetventil (19) verbunden sind und eine Kupplung (16) zum Koppeln der beiden Einzelantriebe bei Geradeausfahrt vorgesehen ist, wobei das Magnetventil (19) bei Geradeausfahrt in seine geöffnete Stellung und bei Kurvenfahrt in seine Schließstellung geschaltet ist.

2. Gleiskettenfahrzeug nach Anspruch 1, dadurch gekennzeichnet, daß die beiden Kreisläufe der beiden Fahrpumpen (3, 4) über das wenigstens eine Magnetventil (19) miteinander verbunden sind und die Kupplung (16) die beiden Hydraulikmotoren (7, 8) bei Geradeausfahrt koppelt.

3. Gleiskettenfahrzeug nach Anspruch 1 oder 2, dadurch gekennzeichnet, daß die beiden Kreisläufe der beiden Fahrpumpen (3, 4) hochdruck- und niederdruckseitig über die Magnetventile (19, 20) verbunden sind.

4. Gleiskettenfahrzeug nach einem der Ansprüche 1 bis 3, dadurch gekennzeichnet, daß die Kupplung (16) über Gelenkwellen (17, 18) mit den Hydraulikmotoren (7, 8) gekoppelt ist.

5. Gleiskettenfahrzeug nach einem der Ansprüche 1 bis 3, dadurch gekennzeichnet, daß die Kupplung (16) über Gelenkwellen (17, 18) mit den Getrieben (14, 15) gekoppelt ist.

6. Gleiskettenfahrzeug nach einem der Ansprüche 1 bis 5, dadurch gekennzeichnet, daß die Fahrpumpen (3, 4) gemeinsam antreibbar sind.

7. Gleiskettenfahrzeug nach einem der Ansprüche 1 bis 6, dadurch gekennzeichnet, daß die Kupplung (16) eine Lamellenkupplung ist.

8. Gleiskettenfahrzeug nach einem der Ansprüche 1 bis 7, dadurch gekennzeichnet, daß die Getriebe (14, 15) schaltbar sind.

9. Gleiskettenfahrzeug nach Anspruch 8, dadurch gekennzeichnet, daß die Getriebe (14, 15) Turasgetriebe sind.

Fig. 1

Fig. 2